(19) Europäisches Patentamt
European Patent Office
Office européen des brevets

(11) **EP 0 739 500 B1**

(12) **EUROPÄISCHE PATENTSCHRIFT**

(45) Veröffentlichungstag und Bekanntmachung des Hinweises auf die Patenterteilung:
**07.10.1998 Patentblatt 1998/41**

(21) Anmeldenummer: **94922266.5**

(22) Anmeldetag: **07.07.1994**

(51) Int Cl.⁶: **G05B 19/416**, G05B 19/404, G05B 5/01

(86) Internationale Anmeldenummer:
**PCT/EP94/02222**

(87) Internationale Veröffentlichungsnummer:
**WO 95/02212 (19.01.1995 Gazette 1995/04)**

(54) **REGELUNGSVERFAHREN**

CONTROL PROCESS

PROCEDE DE REGULATION

(84) Benannte Vertragsstaaten:
**AT BE CH DE FR GB IT LI SE**

(30) Priorität: **08.07.1993 DE 4322857**

(43) Veröffentlichungstag der Anmeldung:
**30.10.1996 Patentblatt 1996/44**

(73) Patentinhaber: **THE GLEASON WORKS
Rochester New York 14692 (US)**

(72) Erfinder:
• **HÖCHT, Johannes
D-8052 Moosburg (DE)**

• **LEICHT, Bernhard
D-81737 München (DE)**

(74) Vertreter: **Schmidt-Evers, Jürgen, Dipl.-Ing. et al
Patentanwälte
Mitscherlich & Partner,
Postfach 33 06 09
80066 München (DE)**

(56) Entgegenhaltungen:
**EP-A- 0 311 127**

**Beschreibung**

Die Erfindung betrifft ein Verfahren zum Regeln des Antriebs eines durch den Antrieb entlang einer Ortskurve zu bewegenden Werkgegenstandes, bei dem die Bewegung entsprechend einer periodischen Führungsgröße veränderbar ist oder bei dem auf die Bewegung eine periodische Störgröße einwirkt, sowie eine Regelungsanordnung zur Durchführung des Verfahrens.

Eine derartige Regelungsanordnung ist aus dem DE-Gbm G 92 00 707.2 bekannt. Die bekannte Regelungsanordnung berücksichtigt sich periodisch ändernde Führungs- und Störgrößen. In diese Kategorie fallen spanende Bearbeitungsvorgänge, wie Hobeln, Drehen, Fräsen, Schleifen, Bohren u.s.w.. Die Periodizität bezieht sich dabei nicht nur auf die Führungsgrößen, wie etwa die Änderung der Winkellage eines Drehteils, sondern auch auf Störgrößen, beispielsweise die Spankräfte. Daneben bezieht sich das Gebrauchsmuster auf Kopplungen einer periodischen Linearbewegung mit einer periodischen Drehbewegung, Kopplungen zweier Drehbewegungen oder Kopplungen periodischer Linearbewegungen. Weiterhin betrifft die bekannte Regelungsanordnung auch Gleichlaufschwankungen bei den Antrieben der Werkzeugmaschinen infolge einer Polumschaltung. Als Werkgegenstand ist ein Werkzeug oder ein Werkstück bezeichnet.

Konventionelle Regelungsmethoden erlauben keine ausreichende Unterdrückung der äußeren Störgrößen, da sonst die Gefahr von Instabilitäten besteht. Dies bezieht sich insbesondere auch auf den Fall, daß die Periodizität der Führungsgröße und der Störgröße gleich sind.

Nach der EP 0 311 127 A2 ist eine Vorrichtung zum Regeln eines Servomotors bekannt, welche einen Vorwärtskopplungszweig zur Korrektur eines Geschwindigkeits-Sollwertsignales enthält. Geregelt wird hier die Drehwinkelposition des Servomotors. Das Ziel einer solchen Regelung ist es, Vibrationen zu vermindern.

In dem Buch O. Föllinger "Regelungstechnik", Hüthig-Verlag, Heidelberg, 6. Auflage, S. 519 mit Literaturhinweisen S. 526 ist eine von C. Johnson vorgeschlagene Erweiterung eines sogenannten Luenberger-Beobachters um ein Störmodell beschrieben. Dabei wird ein phasen- und amplitudenrichtig berechneter Störschätzwert mit umgekehrten Vorzeichen der Regelungsstrecke aufgeschaltet, wie dies ähnlich bei direkt meßbaren Störungen durch die seit langem bekannte Störgrößenaufschaltung erfolgt. Dieses Verfahren eignet sich vorteilhaft bei Einsatz eines digitalen Prozessrechners. Für jeden Abtastschritt muß jedoch sowohl das mathematische Abbild der Regelstrecke wie auch der Störung berechnet werden. Mit zunehmender Komplexität des Störmodells führt die laufende Berechnung zu einem erheblichen Rechenaufwand, der bei schnellen Vorgängen, wie bei der Regelung elektrischer Antriebe bei Werkzeugmaschinen, übliche Standardmikroprozessoren überfordern kann. Dabei können die Abtastintervalle unzulässig hoch werden, was die Gefahr von Instabilitäten birgt. Tritt dazu noch ein digitales Meßsystem, wie die Lageermittlung durch Winkelschrittgeber, so kann eine Regelung unmöglich werden, wenn durch die zu niedrige Abtastfrequenz höherfrequente Schwankungen infolge der Verletzung des Abtasttheorems zurückgefaltet werden. Neben der Elimination von Störungen bereitet auch die schleppfehlerfreie Einregelung einer periodischen Führungsgröße Schwierigkeiten.

Das oben genannte DE-Gbm G 92 00 708.2 gibt eine Lösung der beschriebenen Regelungsaufgabe an, die ohne Störgrößenbeobachter auskommt. Die Lösung besteht darin, daß zum Einregeln der periodischen Führungsgröße und/oder zum Ausregeln einer periodischen Störgröße der Regler mindestens ein konjugiert komplexes Polstellenpaar aufweist, wobei der Betrag jeder der beiden Polstellen gleich oder annähernd gleich der Periodenfrequenz der Störgröße ist. Praktisch sieht der Regelkreis so aus, daß parallel zu einem nach konventionellen Gesichtspunkten entworfenen Regler eine Störkompensationseinrichtung in Form eines Störungsreglers geschaltet ist. Dieser Störungsregler hat dabei die vorstehend erwähnten Eigenschaften, die mit dem Verhalten eines integralen Bandpaßreglers oder eines proportionalen Bandpaßreglers bezeichnet sind.

Die Eigenschaften beider Reglertypen sind durch ihre komplexen Übertragungsfunktionen dargestellt, d.h. die Ausgangsgröße des Störungsreglers bezogen auf seine Eingangsgröße, die der Regeldifferenz entspricht, sind durch die Laplace-Transformierten der entsprechenden Größen dargestellt. Die komplexe Funktionsvariable s läßt sich über die Beziehung $s = \sigma + j\omega$ in einer Frequenzdarstellung veranschaulichen, die durch den Amplitudengang und den Phasengang des Reglers bestimmt sind. Außerdem kann durch eine umgekehrte Laplace-Transformation eine direkte Darstellung im Zeitbereich erreicht werden.

Ändert sich bei der bekannten Regelungsanordnung die Frequenz der periodischen Bewegung, dann muß die Frequenz des Störungsreglers bzw. der Störkompensationseinrichtung nachgeführt werden. Problem ergeben sich dann, wenn derartige Frequenzänderungen innerhalb der ursprünglichen Periode auftreten.

Der Erfindung liegt daher die Aufgabe zugrunde, ein verbessertes Regelungsverfahren anzugeben, mit dem die zuvor beschriebenen Nachteile eliminiert werden, insbesondere mit dem unmittelbar auf Frequenzänderungen einer periodischen Führungsgröße oder einer periodischen Störgröße reagiert werden kann, die auf die Bewegung eines entlang einer bestimmten Ortskoordinate zu bewegenden Werkgegenstandes einwirken.

Desweiteren ist eine Regelungsanordnung zur Realisierung des erfindungsgemäßen Regelungsverfahrens anzugeben.

Die Aufgabe wird gemäß Anspruch 1 gelöst durch ein Regelungsverfahren, bei die von dem Werkgegenstand durchfahrene Ortskurve in äquidistante Abschnitte unterteilt wird und zu dem aktuellen Koordinatenort des Werkgegenstandes auf der von diesem durchfahrenen Ortskurve jeweils die entsprechende Regeldifferenz ermittelt und gespeichert wird. Aus der Regledifferenz wird anschließend, abhängig vom augenblicklichen Koordinatenort des Werkgegenstandes, eine entsprechende Reglerausgangsgröße gewonnen.

Der Erfindung liegt die Erkenntnis zugrunde, daß periodische Führungs- und Störgrößen häufig nicht in ursprünglicher Abhängigkeit von der Zeit auftreten, sondern als Funktion einer Ortskoordinate, z.B. einer Lage oder eines Winkels. Indem aufgrund eines ermittelten Ortes eines Werkgegenstandes auf der von ihm durchfahrenen Ortskurve auf die Regeldifferenz geschlossen und aus der Regeldifferenz eine Reglerausgangsgröße für den Antrieb des Werkgegenstandes gewonnen wird, lassen sich erheblich verbesserte Regelungseigenschaften erreichen.

Ausgestaltungen der Erfindung sind in den Unteransprüchen beschrieben.

In einer bevorzugten Ausgestaltung wird nach Anspruch 2 das erfindungsgemäße Regelungsverfahren durch einen Prozessrechner gesteuert.

Gemäß Anspruch 3 wird der Wert der aktuellen Reglerausgangsgröße aus dem Wert der aktuellen Regeldifferenz und aus gespeicherten zurückliegenden Werten der Reglerausgangsgröße und der Abweichung bestimmt. Vorzugsweise werden gemäß Anspruch 4 und 5 dazu nur die beiden zurückliegenden Werte der Regeldifferenz und der Reglerausgangsgröße benötigt, so daß die zurückliegenden Werte der Reglerausgangsgröße und der Regeldifferenz nur von einem Teil einer Periode der periodischen Führungsgröße bzw. der periodischen Störgröße, die auf die Bewegung des Werkgegenstandes einwirken, gespeichert werden müssen.

Erfindungsgemäß wird in Anspruch 7 eine Regelungsanordnung zum Regeln des Antriebs für einen entlang einer bestimmten Ortskurve zu bewegenden Werkgegenstand beschrieben, die eine Vorrichtung zur Unterteilung der von dem Werkgegenstand durchfahrenen Ortskurve, beispielsweise einen Winkelinkrementgeber, vorsieht, wobei der Regler der Regelungsanordnung oder ein Teil desselben aus der zuvor ermittelten und gespeicherten Regeldifferenz, die abhängig von dem augenblicklichen Koordinatenort des Werkgegenstandes auf der von ihm durchfahrenen Ortskurve ist, die Reglerausgangsgröße erzeugt.

Gemäß Anspruch 8 umfaßt der Regler neben den ortsabhängig regelnden Teil ein zeitabhängig regelndes parallel geschaltetes Reglerteil.

Weitere bevorzugte Ausgestaltungen der erfindungsgemäßen Regelungsanordnung sind in den Unteransprüchen 9 und 10 angegeben.

Die Erfindung wird nachfolgend anhand der beigefügten Zeichnung beschrieben. Es zeigen:

Fig. 1 das Blockschaltbild einer bekannten Regelungsanordnung,

Fig. 2 das Blockschaltbild einer erfindungsgemäßen Regelungsanordnung,

Fig. 3 eine Schabradschleifmaschine zur Erläuterung der Erfindung,

Fig. 4 ein Diagramm zur Erläuterung des in einer Periode des Werkgegenstandes auftretenden Winkelfehlers bei einer Zahnradschleifmaschine,

Fig. 5. die Darstellung eines sinusförmigen Drehwinkelfehler mit schwankender Periodendauer im Zeitbereich,

Fig. 6 die Darstellung des gleichen sinusförmigen Drehwinkelfehlers im Ortsbereich mit konstanter Periodendauer,

Fig. 7 eine im kontinuierlichen Abwälzverfahren arbeitende Zahradbearbeitungsmaschine, bei der das erfindungsgemäße Regelungsverfahren Anwendung findet,

Fig. 8 die Darstellung einer Schaltungsanordnung, bei der die Regeldifferenz aus einer anderen Größe als der Ortskoordinate des Werkgegenstandes gewonnen wird, und

Fig. 9 eine schematische Darstellung des Schwingungsmodells zur mathematischen Beschreibung eines Hörgrößenreglers.

Die Erfindung wird nachfolgend unter Bezugnahme auf die Zeichnung anhand bevorzugter Ausführungsbeispiele erläutert.

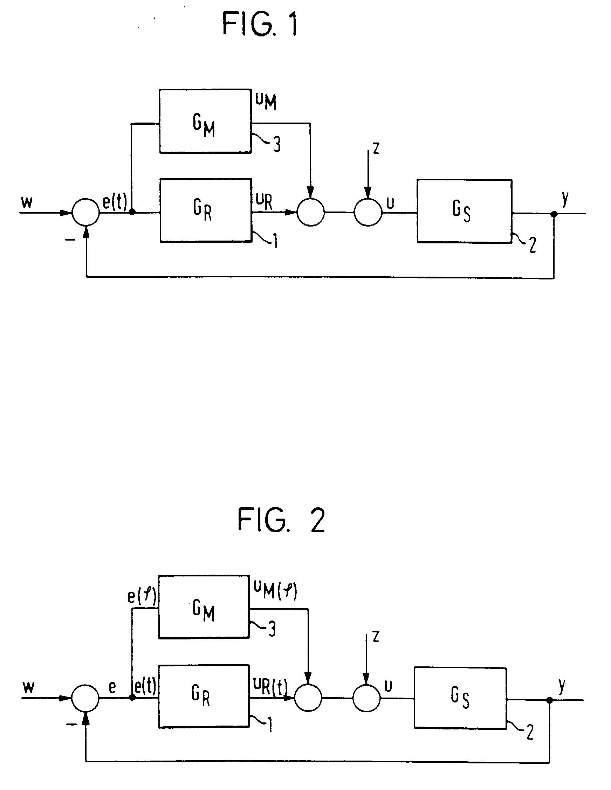

Die in Figur 1 gezeigte Regelungsanordnung ist von ihrer Struktur her ein bekannter Regelkreis mit einem aus zwei parallel geschalteten Reglerteilen 1, 3 bestehenden Regler und einer Regelstrecke 2. Aus der Führungsgröße w und der Ausgangsgröße y der Strecke wird durch Differenzbildung die Regeldifferenz e abgeleitet, die an den Eingang der beiden parallel geschalteten Reglerteile 1, 3 gelegt wird. Die Ausgangsgrößen $u_R$ und $u_M$ der beiden Reglerteile werden addiert. Das Ergebnis der Addition bildet die Stellgröße für die Regelstrecke. In der Figur sind die auf die Strecke wirkenden Störungen durch z symbolisiert, die somit als zusätzliche Eingangsgröße auf die Regelstrecke 2 wirken und die reale Stellgröße u beeinflussen. Eine derartige Regelungsanordnung ist, wie bereits in der Beschreibungseinleitung beschrieben, bereits aus dem DE-Gmb G 92 00 707.2 bekannt.

Es sei nun der Fall betrachtet, daß periodische Führungs- und Störgrößen nicht nur in Abhängigkeit von der Zeit auftreten. Vielmehr liegt eine ursprüngliche Abhängigkeit als Funktion vom Ort auf einer bestimmten Ortskoordinate, beispielsweise eine Abhängigkeit von einer Lage oder einem Winkel, vor. Diese Abhängigkeit tritt beispielsweise infolge der Polumschaltung eines elektrischen Antriebes auf, was zu einer Ungleichförmigkeit der Bewegung führt. In diesem Fall werden Störungen ereignisabhängig hervorgerufen. Störungen, die abhängig von einer bestimmten Ortslage hervorgerufen werden, treten ebenso bei einer Zahnradschleifmaschine auf, bei der ein Teilungsfehler eines Werkstückes nach einer vollständigen Umdrehung auftritt, sowie bei einer Schabradschleifmaschine, bei der die Berührung des Werkstückes durch die Schleifscheibe immer an derselben Schlittenlage eintritt.

Erfindungsgemäß wird dieser Erkenntnis dadurch Rechnung getragen, daß die durch die ortsabhängig auftretenden Störungen hervorgerufene Regeldifferenz abhängig vom Koordinatenort eines Werkgegenstandes entlang einer Ortskoordinate ermittelt wird, d.h. die Regeldifferenz wird nicht auf die Zeit, sondern auf den Koordinatenort des Werkgegenstandes bezogen. Während des Regelungsvorganges wird dazu erfindungsgemäß der Ort des Werkgegenstandes entlang der von diesem durchfahrenen Ortskurve überwacht. Es wird also anstatt einer rein zeitabhängigen Regeldifferenz mit einer ortsabhängigen Regeldifferenz, d.h. einer Regeldifferenz im Ortsbereich, geregelt. Aus der gewonnenen Regeldifferenz wird anschließend eine Reglerausgangsgröße für den Antrieb des Werkgegenstandes gewonnen.

Für die in Figur 1 gezeigte bekannte Regelungsanordnung hat dies zur Folge, daß sie wie in Figur 2 gezeigt, abgewandelt werden muß. Erfindungsgemäß umfaßt der Regler weiterhin zwei Reglerteile 1, 3, wobei jedoch nunmehr das erste Reglerteil 1 im Zeitbereich und das zweite Reglerteil 3 im Ortsbereich regelt. D.h. dem ersten Reglerteil wird die zeitabhängige Regeldifferenz $e(t)$ und dem zweiten Reglerteil die ortsabhängige Regeldifferenz, in diesem Fall die winkelabhängige Regeldifferenz, $e(\varphi)$ als Eingangsgröße zugeführt. Es wird also beim zweiten Reglerteil 3 von der Regelung im Zeitbereich auf die Regelung im Ortsbereich übergegangen. Das erste Reglerteil 1 mit der zeitabhängigen Regeldifferenz $e(t)$ als Eingangsgröße dient nunmehr lediglich für stationäre Regelvorgänge für den Fall, daß sich der Ort des Werkgegenstandes auf der Ortskoordinate noch nicht oder nicht mehr verändert. Dies kann beispielsweise beim Einschalten bzw. Anfahren des Antriebs des zu bearbeitenden Werkgegenstandes der Fall sein. Wäre nur das im Ortsbereich regelnde Reglerteil 3 vorhanden, so würden während dieser Betriebsphase bei einer ausschließlichen Regelung im Ortsbereich keinerlei Regelungsvorgänge stattfinden, da die Ortskoordinate während dieser Betriebsphase konstant wäre. Um dies zu vermeiden, wird dem Reglerteil 3 das Reglerteil 1 parallel geschaltet, das ausschließlich im Zeitbereich regelt und als Eingangsgröße die zeitabhängige Regeldifferenz $e(t)$ aufweist.

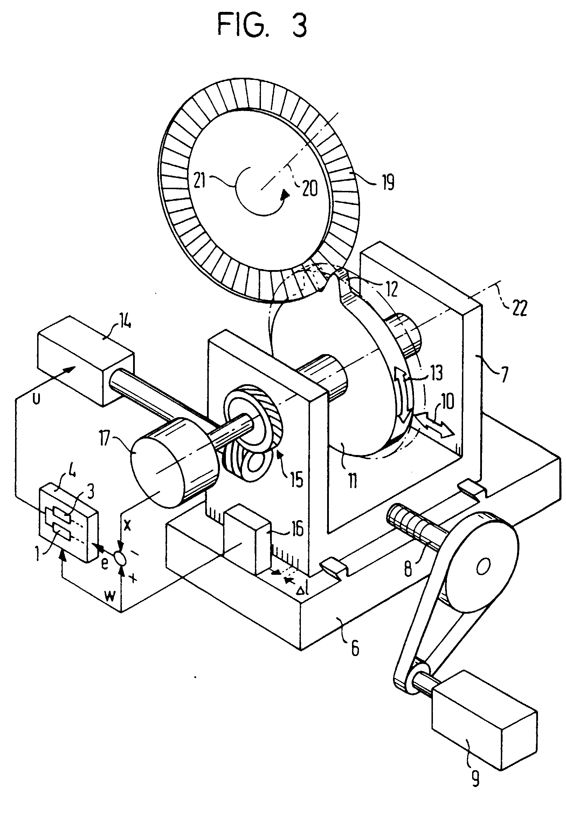

Die Erfindung und ihre Auswirkungen wird nachstehend anhand der in Figur 3 gezeigten Schabradschleifmaschineverdeutlicht.

Auf einer Schlittenführung 6 ist ein Schlitten 7 linear verschiebbar angeordnet. Die lineare Verschiebung des Schlittens 7 erfolgt durch einen Antrieb 9 über eine Gewindespindel 8, derart, daß der Schlitten 7 eine Hin- und Herbewegung ausführt, wie dies durch den Doppelpfeil 10 angedeutet ist. An dem Schlitten 7 ist das zu schleifende Schabrad 11 drehbar um eine Achse 22 gehalten. Von dem Schabrad 11 sind der Einfachheit halber nur zwei Zähne 12 gezeigt. Das Schabrad kann mittels eines Antriebes 14 über einen Schneckentrieb 15 hin- und hergedreht werden, wie dies durch den Doppelpfeil 13 angedeutet ist. In die Lücke zwischen zwei Zähne 12 des Schabrades 11 greift eine Schleifscheibe 19 ein, die um eine schräggestellte Achse 20 rotiert, wie dies durch den Pfeil 21 angedeutet ist. Bei jeder Hin- und Herbewegung des Schabrades 11 erfolgt ein Schleifkontakt mit der Schleifscheibe 19. Dieser Schleifkontakt wirkt sich störend auf das Drehmoment des Antriebes 14 aus, mit dein das Schabrad 11 als Folge der Linearbewegung des Schlittens 7 hin- und hergedreht werden muß. Diese Störung kann zu Fehlern beim Schleifen des Schabrades 11 führen. Wie zuvor beschrieben, tritt eine derartige Störung bei jeder Hin- und Herbewegung des Schabrades 11 auf, wenn das Schabrad 11 in Schleifkontakt mit der Schleifscheibe 19 tritt. Da die Hin- und Herbewegung des Schlittens 7 und die Hin- und Herbewegung des Schabrades 11 periodisch auftreten, treten auch die Störkontakte zwischen dem Schabrad 11 und der Schleifscheibe 19 mit der gleichen Grundfrequenz wie die Bewegung des Schlittens 7 auf. Es liegen somit in diesem Fall periodische und ortsabhängige Störungen vor, da die Störungen nur bei einer bestimmten Schlittenlage auftreten. Erfindungsgemäß wird nunmehr die Abhängigkeit des Drehmomentfehlers des Antriebes 14 von der Schlittenlage 1 ermittelt. Abhängig von der Veränderung $\Delta 1$ der Schlittenlage wird dieentsprechende Regeldifferenz e ermittelt und vom Regler 4 eine Reglerausgangsgröße u erzeugt. Aus diesem Grunde ist es erforderlich, daß die vom Sensor 16 gelieferte Schlittenlage dem Regler 4 zugeführt wird. In dem in Figur 3 gezeigten Ausführungsbeispiel umfaßt der Regler 4 nicht nur das ortsabhängig regelnde Teil 3, sondern dazu parallel geschaltet auch einen zeitabhängig regelnden Teil 1. Wie anhand Figur 2 beschrieben, wird dem Reglerteil 3 die ortsabhängige Regeldifferenz und dem Teil 1 die zeitabhängige Reglerabweichung zugeführt. Der Regler 4 gewinnt somit aus der Schlittenlage und der davon abhängigen Regeldifferenz die Reglerausgangsgröße u für den Antrieb 14 des Schabrades 11. Da mit zunehmendem Schleifvorgang der Schleifkontakt zwischen der Schleifscheibe 19 und dem Schabrad 11 abnimmt, wird sich auch mit zunehmendem Schleifvorgang der störende Einfluß des Schleifkontaktes auf das Drehmoment des Antriebes 14 verringern. Daher ist es notwendig, daß die Regeldifferenz e ständig dem Regler 4 zugeführt wird, so daß die augenblickliche Abhängigkeit der Regeldifferenz e von der Schlittenlage des Schlittens 7 erfaßt werden kann.

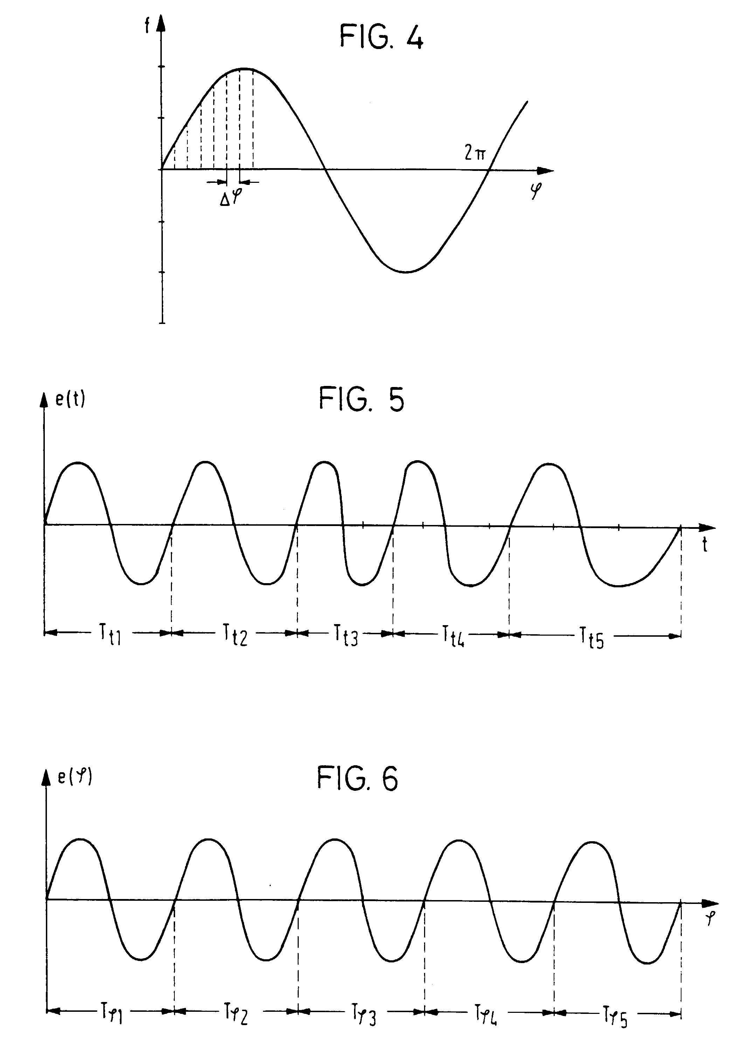

Als weiteres Bespiel zur Erläuterung der Erfindung sei eine Zahnradschleifmaschine betrachtet, bei der bei einer Umdrehung des Zahnrades der in Figur 4 dargestellte Teilungsfehler f abhängig von der Winkellage $\varphi$ des Zahnrades auftritt. Der Teilungsfehler f durchläuft bei einer Umdrehung des Werkstückes gerade eine Periode. Ausgehend von der Abhängigkeit des Teilungsfehlers f von der Winkellage $\varphi$ wird zur Ausregelung des Teilungsfehlers eine entsprechende Reglerausgangsgröße erzeugt. Wenn auch der grundsätzliche Verlauf der Abhängigkeit des Winkelfehlers f von der Winkellage $\varphi$ des Zahnrades gleichbleibt, so wird sich doch mit zunehmender Bearbeitung quantitativ die Abhängigkeit derart verändern, daß im Laufe der Zeit der Teilungsfehler in Abhäiigkeit der Winkellage des Zahnrades abnimmt. Es ist denkbar, daß nach jeweils einem konstanten Drehwinkel $\Delta\varphi$ des Zahrades die Winkellage $\varphi$ des Zahnrades und der von der augenblicklichen Winkellage abhängige Wert des Teilungsfehlers f ermittelt wird. Dieses Verfahren bietet sich insbesondere für rechnergesteuerte Regelungsverfahren an, bei denen mit diskreten Abtastwerten gearbeitet wird. Erfindungsgemäß wird die Regelung nicht im Zeit-, sondern im Ortsbereich durchgeführt, so daß die Abtastwerte gemäß der Erfindung nicht in äquidistanten Zeitintervallen, sondern in äquidistanten Winkelintervallen $\Delta\varphi$ gewonnen werden. Der Drehwinkel 2 $\pi$ in der in Figur 4 gezeigten Darstellung $f=f(\varphi)$ entspricht in der Zeitdarstellung $f=f(t)$ einer Periode T.

Nachstehend wird unter Bezugnahme auf Figur 5 und Figur 6 die Auswirkung der erfindungsgemäßen Maßnahme verdeutlicht. Figur 5 zeigt den Verlauf eines periodischen und zeitabhängigen Drehwinkelfehlers e(t) mit sich ändernder Periode im Zeitbereich. Aus Figur 5 ist ersichtlich, daß sich aufgrund der sich ändernden Periode des zeitabhängigen Drehwinkelfehlers e(t) auch die einzelne Periodendauer der Schwingungen verändern, so daß schwankende Periodendauern $T_{t1}$ bis $T_{t5}$ auftreten. Dergleiche periodisch auftretende sinusförmige Drehwinkelfehler ist in Figur 6 im Ortsbereich, d.h. unter Bezugnahme auf Figur 4 abhängig von der Winkellage $\varphi$ des Zahnrades, dargestellt. Aufgrund der Tatsache, daß der Winkelfehler e ($\varphi$) 2 $\pi$-periodisch auftritt, ergibt sich auch bei einer Frequenzänderung des Drehwinkelfehlers im Zeitbereich, beispielsweise durch Beschleunigung des Zahnradantriebes, keine Periodenabweichung im Ortsbereich, d.h. bezüglich der Winkellage. Daher erscheinen im Ortsbereich die Periodendauern $T\varphi_1$ bis $T\varphi_5$ des ortsabhängigen Drehwinkelfehlers e($\varphi$) konstant.

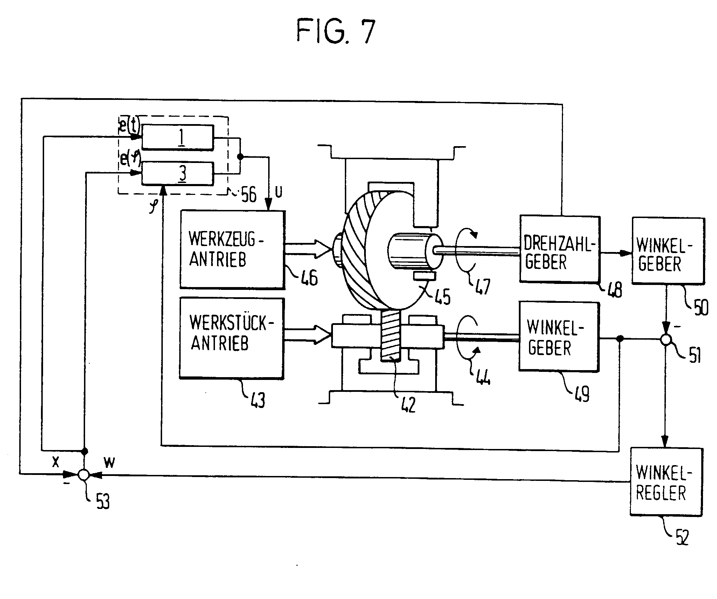

Figur 7 zeigt ein weiteres Beispiel zur Verdeutlichung der Erfindung. Ein zahnrad-bzw. schneckenförmiges Werkzeug 45 wird kontinuierlich mit einem zahnradförmigen Werkstück 42 abgewälzt. Das Werkstück 42 wird über einen Führungsantrieb 43 drehzahlgeregelt, so daß sich die mit dem Pfeil 44 angedeutete Drehrichtung ergibt. Das Werkzeug 45 wird von dem Folgeantrieb 64 angetrieben, wodurch sich die mit dem Pfeil 47 angedeutete Drehrichtung ergibt. Mit dem Werkstück 42 ist ein Winkelgeber 49 gekoppelt. Mit dem Werkzeug 45 ist ein Drehzahlgeber 48 und ein Winkelgeber 50 gekoppelt. Die von den beiden Winkelgebern 49, 50 erzeugten Ausgangssignale werden einem Differenzbilder 51 zugeführt. Die so erzeugte Regeldifferenz wird einem Winkelregler 52 zugeführt, der den Drehzahlsollwert für den Folgeantrieb 46 erzeugt. Der Drehzahlsollwert w und die von dem Drehzahlgeber 48 erzeugte DrehzahlReglerausgangsgröße x werden einem weiteren Differenzbilder 53 zugeführt, welcher die Regeldifferenz e erzeugt. Das Werkzeug 45 weist gegenüber dem Werkstück 42 geringe Verzahnungs-Abweichungen auf, so daß dadurch Drehzahl- und Winkelschwankungen zwischen dem Werkzeug 45 und dem Werkstück 42 hervorgerufen werden. Der Werkzeugantrieb 46 wird durch einen Regler 56 geregelt, der dem Werkzeugantrieb 46 eine Stellgröße u zuführt. Erfindungsgemäß umfaßt der Regler 56 neben dem bekannten zeitabhängigen Reglerteil 1 ein ortsabhängig regelndes Reglerteil 3, dem als Eingangsgröße die ortsabhängige Regeldifferenz e($\varphi$) zugeführt ist. Beide Reglerteile 1, 3 sind parallel geschaltet. Die Winkellage des Werkstückes wird durch den Winkelgeber 49 vorzugsweise nach äquidistanten Änderungen $\Delta\varphi$ erfaßt und die der aktuellen Winkellage entsprechende Regeldifferenz wird von einem Differenzbilder 53 ermittelt.

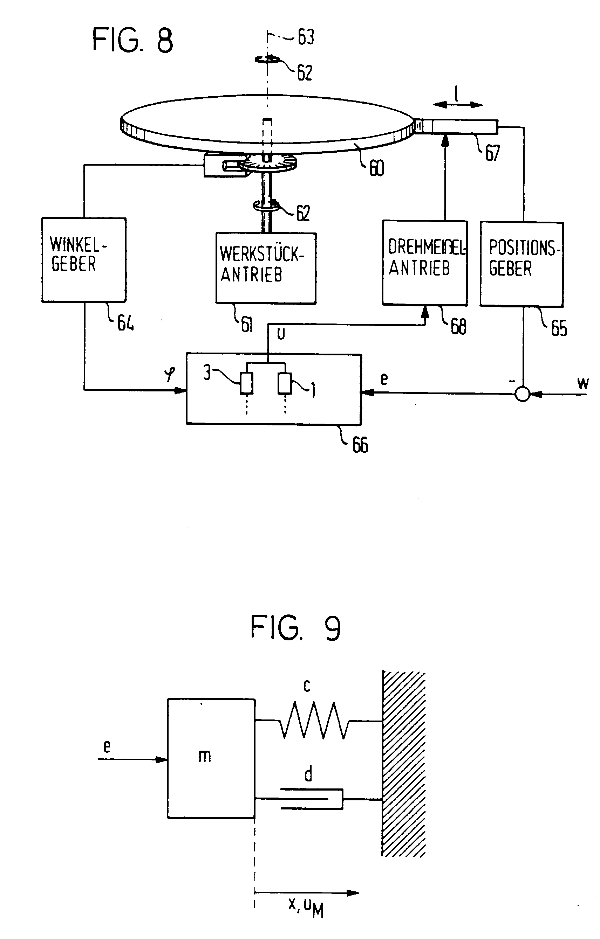

Bei den in Figur 3 und 7 gezeigten Ausführungsbeispielen wird die den Reglern 4 bzw. 56 zugeführte Regeldifferenz e jeweils unmittelbar aus der entsprechenden Ortskoordinate, d.h. aus der Schlittenlage des Schlittens 6 bzw. der Winkellage des Werkstückes 42, abgeleitet. Um zu verdeutlichen, daß die Regeldifferenz e auch aus einer anderen Größe als der Ortskoordinate des entsprechenden Werkgegegenstandes gewonnen werden kann, zeigt Figur 8 ein weiteres vereinfachtes Ausführungsbeispiel. Dabei wird eine elliptisch geformte Scheibe 60 mithilfe eines Drehmeißels 67 bearbeitet. Das Werkstück 60 wird durch einen Werkstück-Antrieb 61 um eine Achse 63 entlang der Pfeilrichtung 62 gedreht. Mit Hilfe des Drehmeißels 67 soll das Werkstück 60 auf kreisrunde Form abgeschliffen werden. Der Drehmeißel 67 kontaktiert die elliptisch geformte Scheibe 60, wobei die Spandicke des vom Drehmeißel abhehobenen Material größerwird, wenn, wie in Figur 8 gezeigt, derjenige Teil der Scheibe 60 mit der größeren Halbachse den Drehmeißel 67 passiert. Mit jedem Kontakt zwischen der Scheibe 60 und dem Drehmeißel 67 wird der Antrieb der Scheibe 60 beeinflußt, so daß ein Drehwinkelfehler in Abhängigkeit von der jeweiligen Winkellage der Scheibe 60 auftritt. Die Winkellage der Scheibe 60 wird durch einen Winkelgeber 64 ermittelt und einem Regler 66 zugeführt. Der nachgiebig gelagerte Drehmeißel 67 schwingt aufgrund der elliptischen Form der Scheibe 60 periodisch um die Sollposition w. Aus dem Vorschub des Drehmeißels 67 kann geschlossen werden, inwieweit die Scheibe 60 noch elliptisch geformt ist oder bereits eine kreisrunde Form erreicht hat. Aus diesem Grunde wird die Lage 1 des Drehmeißels 67 durch einen Positionsgeber 65 ermittelt und durch Differenzbildung zwischen einer Führungsgröße w und dem Vorschubweg 1 des Drehmeißels 67 die Regeldifferenz e gewonnen, die dem Regler 66 zugeführt wird. Bei dem in Figur 8 gezeigten Ausführungsbeispiel wird somit im Ortsbereich geregelt, da abhängig von der Winkellage φ der Scheibe 60 eine Stellgröße u für den Drehmeißenantrieb 68 ermittelt wird, und die Regeldifferenz e wird nicht aus der Winkellage φ der Scheibe 60, sondern aus einer anderen Größe, nämlich der Lage 1 des Drehmeißels 67, gewonnen.

Vorzugsweise soll das erfindungsgemäße Regelungsverfahren mithilfe eines Digitalrechners durchgeführt werden. Dabei erfolgt die Regelung anhand eines Algorithmus, der nachfolgend hergeleitet werden soll.

Die Berechnung der Koeffizienten eines im Ortsbereich arbeitenden Regelalgorithmus wird nachfolgend aufgezeigt.

Das bekannten Schwingungsmodell kann unter Bezugnahme auf Figur 9 allgemein durch eine sinusförmig angeregte Masse m mit einer Federkonstante c und einer Dämpfungskonstante d beschrieben werden. Die Eingangsgröße des Schwingungsmodells ist die Regeldifferenz e, die als die die Masse m anregende Kraft aufgefaßt werden kann. Die Ausgangsgröße des Schwingungsmodells entspricht der Geschwindigkeit der schwingenden Masse. Für die Geschwindigkeit $u_M$ kann demnach folgende bekannte Differentialgleichung aufgestellt werden:

$$(1) \qquad m \cdot \dot{u}_M + d \cdot \dot{u}_M + c \cdot u_M = \dot{e}$$

Wird die Differentialgleichung im Zeitbereich mittels Laplace-Transformation in den Frequenzbereich transferiert, so ergibt sich als Übertragungsfunktion des Störreglers folgende Formel:

$$(2) \qquad G_M(s) = \frac{U_M(s)}{E(s)} = \frac{g_1 \cdot s}{s^2 \cdot h_2 + s \cdot h_1 + 1}$$

Dabei ist $h_1$ analog zur Dämpfung des Massenschwingers, $h_2$ berücksichtigt den quadrierten Kehrwert der Schwingungsanzahl von 0 bis $2\pi$ und $g_1$ bestimmt die Amplitudenverstärkung des Eingangssignales. Treten nun abhängig vom Ort eines Werkgegenstandes auf einer Ortskurve Störungen auf, so wird, wie bereits anhand Figur 6 beschrieben, die Stellgröße und die Regeldifferenz der Regelungsanordnung keine ursprüngliche Abhängigkeit von der Frequenz mehr aufweisen. Dies bedeutet, daß die komplexe veränderliche s in der zugehörigen Übertragungsfunktion des Schwingungsmodelles nicht mehr die Dimension rads$^{-1}$ aufweist, sondern dimensionslos ist.

Gleichung (2) beschreibt den Zusammenhang zwischen Regeldifferenz und Ausgangsgröße des Störreglers als System zweiter Ordnung. Es sind jedoch auch Störregler für Systeme höherer Ordnung realisierbar.

Nach dem Buch "Grundlagen der Regelungstechnik" von Dörrscheidt und Latzel, Teubner Verlag, Stuttgart, 1989, S. 428-429 könnten für Störregler zweiter Ordnung Regelalgorithmen in Polynomform angegeben werden, die bei der Umsetzung von Regelverfahren auf digitale Rechner Anwendung finden.

Für die Übertragungsfunktion eines Reglers 2. Ordnung mit der Eingangsgröße $e_k$ und der Ausgangsgröße $u_{mk}$ gilt demnach allgemein:

$$(3) \qquad G_M(s) = \frac{g_0 + g_1 s + g_2 s^2}{h_0 + h_1 s + h_2 s^2} \cdot$$

Für die unter (3) beschriebene Übertragungsfunktion existiert nach Dörrscheidt/Latzel folgender Regelalgorithmus:

$$(4) \qquad u_{m_k} = d_0 \cdot e_k + d_1 \cdot e_{k-1} + d_2 \cdot e_{k-2} + c_1 \cdot u_{M_{k-1}}, + c_2 \cdot u_{M_{k-2}}$$

Die Koeffizienten des Regelalgorithmus lassen sich nach Dörrscheidt/Latzel abhängig von den Koeffizienten der zugehörigen Übertragungsfunktion ermitteln. Bei dem mit (4) bezifferten Algorithmus wird davon ausgegangen, daß die diskreten Werte der Regeldifferenz $e_{k-i}$ und der Stellgröße $um_{k-i}$ durch Abtastung mit einem Abtastintervall von T gewonnen werden. Die Indizes k, k-1, k-2 stehen für den jeweils aktuellen Wert und den um T bzw. 2T gegenüber dem aktuellen Wert zurückliegenden Werte der Ein-bzw. Ausgangsgröße des Störreglers.

Die aus dem Fachbuch zur Berechnung der Koeffizienten des oben genannten Algorithmus zur Regelung im Zeitbereich abgeleiteten Formeln können auf den Ortsbereich einfach übertragen werden, indem das Abtastintervall T durch das Abtastintervall im Ortsbereich ersetzt wird. Wie anhand Figur 4 beschrieben, wird der Ort des Werkgegenstandes auf der Ortskurve, der Wert der Regeldifferenz sowie die Abhängigkeit der Regeldifferenz vom Ort des Werkgegenstandes auf der Ortskurve jeweils nach einer äquidistanten Änderung $\Delta 1$ des Ortes des Werkgegenstandes auf der Ortskurve ermittelt. Für die Koeffizienten des Regelalgoritmus nach Formel (4) ergibt sich demnach folgendes:

$$(5) \qquad d_0 = \frac{g_0 + g_1 \dfrac{2}{\Delta \ell} + g_2 \left(\dfrac{2}{\Delta \ell}\right)^2}{h_0 + h_1 \dfrac{2}{\Delta \ell} + h_2 \left(\dfrac{2}{\Delta \ell}\right)^2};$$

$$(6) \qquad d_1 = \frac{2g_0 - 2g_2 \left(\dfrac{2}{\Delta \ell}\right)^2}{h_0 + h_1 \dfrac{2}{\Delta \ell} + h_2 \left(\dfrac{2}{\Delta \ell}\right)^2};$$

$$(7) \qquad d_2 = \frac{g_0 - g_1 \dfrac{2}{\Delta \ell} + g_2 \left(\dfrac{2}{\Delta \ell}\right)^2}{h_0 + h_1 \dfrac{2}{\Delta \ell} + h_2 \left(\dfrac{2}{\Delta \ell}\right)^2};$$

$$(8) \qquad c_1 = \frac{2h_0 - 2h_2 \left(\dfrac{2}{\Delta \ell}\right)^2}{h_0 + h_1 \dfrac{2}{\Delta \ell} + h_2 \left(\dfrac{2}{\Delta \ell}\right)^2};$$

$$(9) \qquad c_2 = -\frac{h_0 - h_1 \dfrac{2}{\Delta \ell} + h_2 \left(\dfrac{2}{\Delta \ell}\right)^2}{h_0 + h_1 \dfrac{2}{\Delta \ell} + h_2 \left(\dfrac{2}{\Delta \ell}\right)^2}$$

Für den Fall, daß die Ortskoordinate der Drehwinkel $\varphi$ ist, ergibt sich ein Abtastintervall von $\Delta \varphi$. Unter Zugrundelegung der aus dem Schwingungsmodell hergeleiteten Übertragungfunktion nach Formel (2) (d.h. $g_0 = g_1 = 0$ und $h_0 = 1$ bei der Übertragungsfunktion nach Formel (4)) ergibt sich für die orts- (winkel-) abhängigen Koeffizienten des Regelalgorithmus:

$$(10) \qquad d_1 = 0$$

$$(11) \qquad d_0 = -d_2 = \frac{g_1 \cdot \dfrac{2}{\Delta \varphi}}{1 + h_1 \cdot \dfrac{2}{\Delta \varphi} + h_2 \cdot \left(\dfrac{2}{\Delta \varphi}\right)^2}$$

$$(12) \qquad c_1 = -\frac{2 - 2 \cdot h_2 \cdot \left(\dfrac{2}{\Delta \varphi}\right)^2}{1 + h_1 \cdot \dfrac{2}{\Delta \varphi} + h_2 \cdot \left(\dfrac{2}{\Delta \varphi}\right)^2}$$

$$(13) \qquad c_2 = \frac{1 - h_1 \cdot \dfrac{2}{\Delta \varphi} + h_2 \cdot \left(\dfrac{2}{\Delta \varphi}\right)^2}{1 + h_1 \cdot \dfrac{2}{\Delta \varphi} + h_2 \cdot \left(\dfrac{2}{\Delta \varphi}\right)^2}.$$

$u_{mk}$ beschreibt nunmehr die von dem Störgrößenregler bei einem aktuellen Winkel abgegebene Stellgröße bzw. Ausgangsgröße des Störgrößenreglers, $e_k$ beschreibt das aktuelle Eingangssignal bzw. die aktuelle Regeldifferenz des Störgrößenreglers, die, in Anlehnung an Figur 4, der Drehwinkelfehler f hervorruft. Die Indizes k, k-1 und k-2 stehen nunmehr für die aktuelle Winkellage $\varphi$ bzw. die um $\Delta \varphi$ bzw. $2 \Delta \varphi$ gegenüber der aktuellen Winkellage $\varphi$ zurückliegenden Werte der Ein- bzw. Ausgangsgrößen des Störgrößenreglers. Bemerkenswert für den Regelalgorithmus nach Formel (4) ist, daß der Wert der aktuellen Stellgröße $u_{mk}$ aus lediglich den beiden zurückliegenden Werten der Stellgröße $u_m$ und der Regeldifferenz e sowie dem augenblicklichen Wert der Regeldifferenz berechnet werden kann. Für das erfindungsgemäße Regelungsverfahren und die erfindungsgemäße Regelungsanordnung bedeutet dies, daß bei einem System zweiter Ordnung nur die letzten beiden gegenüber der aktuellen Winkellage zurückliegenden Werte der Regeldifferenz $e_{k-1}$, $e_{k-2}$ und der Stellgröße $u_{mk-1}$, $u_{mk-2}$ gespeichert werden müssen. Dies hat den wesentlichen Vorteil, daß die für die Berechnung des augenblicklichen Wertes der Stellgröße $u_{mk}$ erforderlichen Werte des Regelfehlers e und die zurückliegenden Werte der Stellgröße $u_M$ nicht über mindestens eine Periode, sondern, wie anhand Figur 4 ersichtlich, nur über einen Bruchteil der Periode gespeichert werden müssen. Der Störgrößenregler kann somit sehr schnell auf eine Änderung der Phase und Amplitude einer sinusförmigen Störgröße reagieren.

Da der zuvor genannte Regelalgorithmus keine Berechnung der Strecke bzw. eines Streckenmodelles, das eine mathematische Beschreibung der Regelstrecke darstellt, erfordert, hält sich der Rechenaufwand in Grenzen. Damit können die in Bezug auf den Luenberger-Beobachter erwähnten Probleme nicht auftreten. Das erfindungsgemäße Regelungsverfahren bzw. die erfindungsgemäße Regelungsanordnung erlaubt somit eine von Teilen einer Periode abhängige Regelung, da die zur Berechnung notwendigen Werte nur über einen Bruchteil der Periode gespeichert werden, nämlich nur die um $\Delta\varphi$ und $2\,\Delta\varphi$ zurückliegenden Werte.

Wie bereits erwähnt, muß trotz Regelung im Ortsbereich bzw. in Abhängigkeit vom Ort eines Werkgegenstandes auf einer Ortskoordinate dennoch der übrige Teil des Regelkreises in Abhängigkeit von der Zeit beschrieben und geregelt werden. Wie bereits anhand der vorhergehenden Ausführungsbeispiele erläutert, muß daher jeweils nach Ablauf eines Winkels $\Delta\varphi$ die Drehwinkelabweichung $f(\varphi)$ bzw. die Regeldifferenz $e(\varphi)$ ermittelt werden. Dies kann mithilfe einer Taktung eines Timer-Interrupt erfolgen, wobei ein weiterer Interrupt in dem in der Regelungsanordnung verwendeten Prozessrechner einzurichten ist.

**Patentansprüche**

1. Verfahren zum Regeln des Antriebs für einen durch den Antrieb entlang einer bestimmten Ortskurve $(1,\varphi)$ zu bewegenden Werkgegenstand (11,42,60) einer Werkzeugmaschine, bei dem die Bewegung entsprechend einer periodischen Führungsgröße veränderbar ist oder bei dem auf die Bewegung eine periodische Störkraft einwirkt, mit folgenden Schritten:

   a) es wird die von dem Werkgegenstand (11,42,60) zu durchfahrende Ortskurve in äquidistante Abschnitte $(\Delta l, \Delta\varphi)$ unterteilt,
   b) es wird die dem aktuellen Koordinatenort $(l_k, \varphi_k)$ des Werkgegenstandes (11,42,60) auf der von diesem durchfahrene Ortskurve entsprechende Regeldifferenz $(e_k(l_k), e_k(\varphi_k))$ ermittelt und gespeichert,
   c) es wird zu dem Koorinatenort $(l_k, \varphi_k)$ des Werkgegenstandes (11,42,60) auf der von diesem durchfahrenen Ortskurve unter Auswertung der nach Schritt b) ermittelten und gespeicherten Regeldifferenz $(e_k(l_k), e_k(\varphi_k))$ die aktuelle Reglerausgangsgröße $(u_{mk}(l_k), u_{mk}(\varphi_k))$ gewonnen.

2. Verfahren nach Anspruch 1,
   **dadurch gekennzeichnet,**
   daß die Reglerausgangsgröße $(u_{mk}(l_k), u_{mk}(\varphi_k))$ prozessrechnergesteuert nach einem Regelalgorithmus bestimmter Ordnung (r) gewonnen wird.

3. Verfahren nach Anspruch 2,
   **dadurch gekennzeichnet,**
   daß die aktuelle Reglerausgangsgröße $(u_{mk}(l_k), u_{mk}(\varphi_k))$ aus der aktuellen Regeldifferenz $(e_k(l_k), e_k(\varphi_k))$ und aus gespeicherten zurückliegenden ortsabhängigen Werten der Reglerausgangsgröße $(u_{mk-i}(l_{k-i}), u_{mk-i}(\varphi_{k-i}))$ und der Regeldifferenz $(e_{k-i}(l_{k-i}), e_{k-i}(\varphi_{k-i}))$ mit i=1,2, ... r bestimmt wird.

4. Verfahren nach Anspruch 2 oder 3,
   **dadurch gekennzeichnet,**
   daß die zurückliegenden ortsabhängigen Werte der Reglerausgangsgröße $(u_{mk-i}(l_{k-i}), u_{mk-i}(\varphi_{k-i}))$ und der Regeldifferenz $(e_{k-i}(l_{k-i}), e_{k-i}(\varphi_{k-i}))$ in Abhängigkeit von der Ordnung (r) des Reglalgorithmus nur für einen Teil der Periode gespeichert werden.

5. Verfahren nach Anspruch 2 oder 3,
   **dadurch gekennzeichnet,** daß bei einem Regelalgorithus 2. Ordnung die aktuelle Reglerausgangsgröße $(u_{mk}(l_k), u_{mk}(\varphi_k))$ ausgehend von der Übertragungsfunktion 2. Ordnung

$$G_M(s) = \frac{g_0 + g_1 s + g_2 s^2}{h_0 + h_1 s + h_2 s^2}$$

nach folgender Formel bestimmt wird:

$$u_{mk}(l_k) = d_0(\Delta l)\cdot e_k(l_k) + d_1(\Delta l)\cdot e_{k-1}(l_{k-1}) + d_2(\Delta l)\cdot e_{k-2}(l_{k-2}) +$$

$$C_l(\Delta l)\cdot u_{mk-1}(l_{k-1}) + c_2(\Delta l)\cdot u_{mk-2}(l_{k-2}),$$

wobei gilt:

$$l_k = l_{k-1} + \Delta l,$$

und

$$d_0 = \frac{g_0 + g_1 \frac{2}{\Delta \ell} + g_2 \left(\frac{2}{\Delta \ell}\right)^2}{h_0 + h_1 \frac{2}{\Delta \ell} + h_2 \left(\frac{2}{\Delta \ell}\right)^2};$$

$$d_1 = \frac{2g_0 - 2g_2 \left(\frac{2}{\Delta \ell}\right)^2}{h_0 + h_1 \frac{2}{\Delta \ell} + h_2 \left(\frac{2}{\Delta \ell}\right)^2};$$

$$d_2 = \frac{g_0 - g_1 \frac{2}{\Delta \ell} + g_2 \left(\frac{2}{\Delta \ell}\right)^2}{h_0 + h_1 \frac{2}{\Delta \ell} + h_2 \left(\frac{2}{\Delta \ell}\right)^2};$$

$$c_1 = -\frac{2h_0 - 2h_2 \left(\frac{2}{\Delta \ell}\right)^2}{h_0 + h_1 \frac{2}{\Delta \ell} + h_2 \left(\frac{2}{\Delta \ell}\right)^2};$$

$$c_2 = -\frac{h_0 - h_1 \frac{2}{\Delta \ell} + h_2 \left(\frac{2}{\Delta \ell}\right)^2}{h_0 + h_1 \frac{2}{\Delta \ell} + h_2 \left(\frac{2}{\Delta \ell}\right)^2}.$$

6. Verfahren nach einem der Ansprüche 1 bis 5,
   **dadurch gekennzeichnet,**
   daß die eine Ortskoordinate die Winkellage ($\varphi$) des Werkgegenstandes (11,42,60) auf der von diesem durchfahrenen Ortskurve ist, und daß gilt: $\Delta\varphi = 2\pi/n$, wobei n die Anzahl äquidistanter Abschnitte ist.

7. Regelungsanordnung zum Regeln des Antriebs für einen durch den Antrieb entlang einer bestimmten Ortskurve (l, $\varphi$) zu bewegenden Werkgegenstand (11,42,60) einer Werkzeugmaschine, bei dem die Bewegung entsprechend einer periodischen Führungsgröße veränderbar ist oder bei dem auf die Bewegung eine periodische Störkraft einwirkt,

   mit einem Regler (1, 3; 4; 56; 66) zur Erzeugung der Reglerausgangsgröße (u, $u_M$) für den Antrieb,
   mit einem Istwertgeber (17, 48, 65) zur Ermittlung des Istwertes (x) für den Antrieb des Werkgegenstandes (11, 42, 60),
   mit einem Sollwertgeber (16; 52) zur Vorgabe eines Sollwertes (w) für den Antrieb des Werkgegenstandes (11, 42, 60),

mit einem Vergleicher (53) zur Bildung der Regeldifferenz (e) aus einem Vergleich des Istwertes (x) mit dem Sollwert (w),

**dadurch gekennzeichnet,**

daß eine Vorrichtung zur Unterteilung der von dem Werkgegenstand (11,42,60) durfahrenen Ortskurve (l,$\varphi$) in äquidistante Abschnitte ($\Delta$l,$\Delta\varphi$) sowie zur Ermittlung und Speicherung der dem aktuellen Koordinatenort ($l_k,\varphi_k$) des Werkgegenstandes auf der von diesem durchfahrenen Orstkurve entsprechenden Regeldifferenz ($e_k(l_k),e_k(\varphi_k)$) vorgesehen ist,

wobei der Regler (1, 3; 4; 56; 66) oder ein ortsabhängig regelndes Teil (3) desselben zu dem aktuellen Koordinatenort ($l_k$, $\varphi_k$) des Werkgegenstandes (11,42,60) auf der von diesem durchfahrenen Ortskurve unter Auswertung der zuvor ermittelten und gespeicherten Regeldifferenz die Reglerausgangsgröße ($u_{mk}(l_k),u_{mk}(\varphi_k)$) erzeugt.

8. Regelungsanordnung nach Anspruch 7,
   **dadurch gekennzeichnet,**

   daß der Regler (1, 3; 4; 56; 66) neben dem ortsabhängig regelnden Teil (3) ein zeitabhängig regelndes Teil (1) aufweist, dem als Eingangsgröße die zeitabhängige Regeldifferenz (e(t)) zuführbar ist, und
   daß beide Teile (1, 3) parallel geschaltet sind.

9. Regelungsanordnung nach Anspruch 7 oder 8,
   **dadurch gekennzeichnet,**
   daß der Zusammenhang zwischen der Ausgangsgröße ($u_{mk}(l_k),u_{mk}(\varphi_k)$) des ersten Reglerteiles (3) und der ortsabhängigen Regeldifferenz ($e_k(l_k),e_k(\varphi_k)$) als System höherer Ordnung gegeben ist, dessen Koeffizienten von der Unterteilung ($\Delta$l,$\Delta\varphi$) der von dem Werkgegenstand ( 11,42,60) durchfahrenen Ortskurve abhängen.

10. Regelungsanordnung nach Anspruch 7 oder 8,
    **dadurch gekennzeichnet,**
    daß der Zusammenhang zwischen der Ausgangsgröße ($u_{mk}(l_k),u_{mk}(\varphi_k)$) des ersten Reglerteiles (3) und der ortsabhängigen Regeldifferenz ($e_k(l_k),e_k(\varphi_k)$) als System zweiter Ordnung gegeben ist, dessen Koeffizienten von der Unterteilung ($\Delta$l, $\Delta\varphi$ ) der von dem Werkgegenstand (11,42,60) durchfahrenen Orstkurve abhängen.

## Claims

1. Process for controlling the drive for a workpiece (11, 42, 60) of a machine tool, to be moved by the drive along a specific locus (l, $\varphi$), in which the motion can be varied according to a periodic reference variable, or in which a periodic disturbing force acts on the motion, with the following steps:

   a) the locus to be passed through by the workpiece (11, 42, 60) is subdivided into equidistant sections ($\Delta$l, $\Delta\varphi$),
   b) the system deviation ($e_k(l_k),e_k(\varphi_k)$) corresponding to the current coordinate point ($l_k$, $\varphi_k$) of the workpiece (11, 42, 60) on the locus passed through by said workpiece is calculated and stored,
   c) the current controller output variable ($u_{mk}(l_k),u_{mk}(\varphi_k)$) is obtained at the coordinate point ($l_k$, $\varphi_k$) of the workpiece (11, 42, 60) on the locus passed through by said workpiece, by evaluating the system deviation ($e_k(l_k)$, $e_k(\varphi_k)$) calculated and stored according to step b).

2. Process according to Claim 1, **characterised in that** the controller output variable ($u_{mk}(l_k),u_{mk}(\varphi_k)$) is obtained according to a control algorithm of a specific order (r), under the control of the process computer.

3. Process according to Claim 2, **characterised in that** the current controller output variable ($u_{mk}(l_k),u_{mk}(\varphi_k)$) is determined from the current system deviation ($e_k(l_k),e_k(\varphi_k)$) and from stored, previous position-dependent values of the controller output variable ($u_{mk-i}(l_{k-i}),u_{mk-i}(\varphi_{k-i})$) and of the system deviation ($e_{k-i}(l_{k-i}),e_{k-i}(\varphi_{k-i})$), where i = 1, 2, ... r.

4. Process according to Claim 2 or 3, **characterised in that** the previous, position-dependent values of the controller output variable ($u_{mk-i}(l_{k-i}),u_{mk-i}(\varphi_{k-i})$) and of the system deviation ($e_{k-i}(l_{k-i}),e_{k-i}(\varphi_{k-i})$ ) are stored for only one part of the cycle in relation to the order (r) of the control algorithm.

5. Process according to Claim 2 or 3, **characterised in that** in the case of a 2nd order control algorithm, and based on the 2nd order transfer function

$$G_M(s) = \frac{g_0 + g_1 s + g_2 s^1}{h_0 + h_1 s + h_2 s^2}$$

the current controller output variable $(u_{mk}(l_k), u_{mk}(\varphi_k))$ is determined according to the following formula:

$$u_{mk}(l_k) = d_0(\Delta l) \cdot e_k(l_k) + d_1(\Delta l) \cdot e_{k-1}(l_{k-1}) + d_2(\Delta l) \cdot e_{k-2}(l_{k-2}) +$$

$$c_1(\Delta l) \cdot u_{mk-1}(l_{k-1}) + c_2(\Delta l) \cdot u_{mk-2}(l_{k-2}),$$

where:

$$l_k = l_{k-1} + \Delta l,$$

and

$$d_0 = \frac{g_0 + g_1 \dfrac{2}{\Delta l} + g_2 \left[\dfrac{2}{\Delta l}\right]^2}{h_0 + h_1 \dfrac{2}{\Delta l} + h_2 \left[\dfrac{2}{\Delta l}\right]^2} \quad :$$

$$d_1 = \frac{2g_0 - 2g_2 \left[\dfrac{2}{\Delta l}\right]^2}{h_0 + h_1 \dfrac{2}{\Delta l} + h_2 \left[\dfrac{2}{\Delta l}\right]^2} \quad :$$

$$d_2 = \frac{g_0 - g_1 \dfrac{2}{\Delta l} + g_2 \left[\dfrac{2}{\Delta l}\right]^2}{h_0 + h_1 \dfrac{2}{\Delta l} + h_2 \left[\dfrac{2}{\Delta l}\right]^2} \quad :$$

$$c_1 = -\frac{2h_0 - 2h_2 \left[\dfrac{2}{\Delta l}\right]^2}{h_0 + h_1 \dfrac{2}{\Delta l} + h_2 \left[\dfrac{2}{\Delta l}\right]^2} \quad :$$

$$C_2 \quad = \quad - \quad \frac{h_0 \; - \; h_1 \; \dfrac{2}{\Delta 1} \; + \; h_2 \left[\dfrac{2}{\Delta 1}\right]^2}{h_0 \; + \; h_1 \; \dfrac{2}{\Delta 1} \; + \; h_2 \left[\dfrac{2}{\Delta 1}\right]^2} \quad .$$

6.  Process according to one of Claims 1 to 5,
    **characterised in that** the one position coordinate is the angular position ($\varphi$) of the workpiece (11, 42, 60) on the locus passed through by said workpiece, and that: $\Delta\varphi = 2\pi/n$, where n is the number of equidistant sections.

7.  Control arrangement for controlling the drive for a workpiece (11, 42, 60) of a machine tool, to be moved by the drive along a specific locus (l, $\varphi$), in which the motion can be varied according to a periodic reference variable, or in which a periodic disturbing force acts on the motion, said control arrangement having a controller (1, 3; 4; 56; 66) for generating the controller output variable (u, $u_M$) for the drive, and having an actual-value generator (17, 48, 65) for determining the actual value (x) for the drive of the workpiece (11, 42, 60), and having a setpoint generator (16; 52) for setting a setpoint (w) for the drive of the workpiece (11, 42, 60), and having a comparator (53) for generating the system deviation (e) from a comparison between the actual value (x) and the setpoint (w), **characterised in that** a device is provided for subdividing the locus (l, $\varphi$), passed through by the workpiece (11, 42, 60) into equidistant sections ($\Delta l$, $\Delta\varphi$), as well as for calculating and storing the system deviation ($e_k(l_k), e_k(\varphi_k)$) corresponding to the current coordinate point ($l_k$, $\varphi_k$) of the workpiece on the locus passed through by said workpiece, the controller (1, 3; 4; 56; 66) or a position-dependent controlling part (3) of said controller, generating the controller output variable ($u_{mk}(l_k), u_{mk}(\varphi_k)$) at the current coordinate point ($l_k$, $\varphi_k$) of the workpiece (11, 42, 60) on the locus passed through by said workpiece, by evaluating the previously calculated and stored system deviation.

8.  Control arrangement according to Claim 7,
    **characterised in that** in addition to the position-dependent controlling part (3), the controller (1, 3; 4; 56; 66) has a time-dependent controlling part (1), to which the time-dependent system deviation (e(t)) can be applied as an input variable, and that both parts (1, 3) are connected in parallel.

9.  Control arrangement according to Claim 7 or 8,
    **characterised in that** the relationship between the output variable ($u_{mk}(l_k), u_{mk}(\varphi_k)$) of the first controller part (3) and the position-dependent system deviation ($e_k(l_k), e_k(\varphi k)$) is given as a higher-order system whose coefficients depend on the subdivision ($\Delta l$, $\Delta\varphi$) of the locus passed through by the workpiece (11, 42, 60).

10. Control arrangement according to Claim 7 or 8,
    **characterised in that** the relationship between the output variable ($u_{mk}(l_k), u_{mk}(\varphi_k)$) of the first controller part (3) and the position-dependent system deviation ($e_k(l_k), e_k(\varphi_k)$) is given as a second-order system whose coefficients depend on the subdivision ($\Delta l$, $\Delta\varphi$) of the locus passed through by the workpiece (11, 42, 60).

**Revendications**

1.  Procédé de régulation de l'entraînement pour une pièce (11, 42, 60) d'une machine-outil à déplacer à l'aide de l'entraînement le long d'une trajectoire (l, $\varphi$) déterminée, dans lequel le déplacement peut varier selon une grandeur de référence périodique ou dans lequel une force parasite périodique influe sur le déplacement, comportant les étapes suivantes:

    a) on divise la trajectoire à parcourir par la pièce (11, 42, 60) en tronçons ($\Delta l$, $\Delta\varphi$) équidistants,
    b) on détermine l'écart de réglage ($e_k(l_k)$, $e_k(\varphi_k)$) correspondant au lieu géométrique ($l_k, \varphi_k$) actuel de la pièce (11, 42, 60) sur la trajectoire parcourue par celle-ci et on la mémorise,
    c) on calcule la grandeur de sortie du régulateur ($u_{mk}(l_k)$, $u_{mk}(\varphi_k)$) actuelle pour le lieu géométrique ($l_k$, $\varphi_k$) de la pièce (11, 42, 60) sur la trajectoire parcourue par celle-ci en exploitant l'écart de réglage ($e_k(l_k)$, $e_k(\varphi_k)$) mesuré et mémorisé conformément au point b).

2.  Procédé selon la revendication 1, caractérisé par le fait que l'on obtient la grandeur de sortie du régulateur ($u_{mk}$

$(I_k)$, $u_{mk}(\varphi_k)$) de manière assistée par ordinateur suivant un algorithme de régulation d'ordre (r) donné.

3. Procédé selon la revendication 2, caractérisé par le fait que l'on détermine la grandeur de sortie du régulateur $(u_{mk}(I_k)$, $u_{mk}(\varphi_k)$) actuelle à partir de l'écart de réglage $(e_k(I_k)$, $e_k(\varphi_k)$) actuel et de valeurs précédentes mémorisées, liées au lieu, pour la grandeur de sortie du régulateur $(u_{mk-i}(I_{k-i})$, $u_{mk-i}(\varphi_{k-i})$) et l'écart de réglage $(e_{k-i}(I_{k-i})$, $e_{k-i}(\varphi_{k-i})$) avec i = 1, 2, ...r.

4. Procédé selon la revendication 2 ou 3, caractérisé par le fait que l'on mémorise les valeurs précédentes liées au lieu pour la grandeur de sortie du régulateur $(U_{mk-i}(I_{k-i})$, $U_{mk-i}(\varphi_{k-i})$) et l'écart de réglage $(e_{k-i}(I_{k-i})$, $e_{k-i}(\varphi_{k-i})$) en fonction de l'ordre (r) de l'algorithme de régulation seulement pour une partie de la période.

5. Procédé selon la revendication 2 ou 3, caractérisé par le fait que pour un algorithme de régulation d'ordre 2, on détermine la grandeur de sortie du régulateur $(u_{mk}(I_k)$, $u_{mk}(\varphi_k)$) actuelle à partir de la fonction de transfert d'ordre 2

$$G_M(s) = \frac{g_0 + g_1 s + g_2 s^2}{h_0 + h_1 s + h_2 s^2}$$

selon la formule suivante:

$$u_{mk}(I_k) = d_0(\Delta I)^* e_k(I_k) + d_1(\Delta I)^* e_{k-1}(I_{k-1}) + d_2(\Delta I)^* e_{k-2}(I_{k-2}) +$$

$$c_1(\Delta I)^* u_{mk-1}(I_{k-1}) + c_2(\Delta I)^* u_{mk-2}(I_{k-2}),$$

dans laquelle

$$I_k = I_{k-1} + \Delta I,$$

et

$$d_0 = \frac{g_0 + g_1 \frac{2}{\Delta \ell} + g_2 \left(\frac{2}{\Delta \ell}\right)^2}{h_0 + h_1 \frac{2}{\Delta \ell} + h_2 \left(\frac{2}{\Delta \ell}\right)^2};$$

$$d_1 = \frac{2g_0 - 2g_2 \left(\frac{2}{\Delta \ell}\right)^2}{h_0 + h_1 \frac{2}{\Delta \ell} + h_2 \left(\frac{2}{\Delta \ell}\right)^2};$$

$$d_2 = \frac{g_0 - g_1 \frac{2}{\Delta \ell} + g_2 \left(\frac{2}{\Delta \ell}\right)^2}{h_0 + h_1 \frac{2}{\Delta \ell} + h_2 \left(\frac{2}{\Delta \ell}\right)^2};$$

$$c_1 = - \frac{2h_0 - 2h_2 \left(\frac{2}{\Delta \ell}\right)^2}{h_0 + h_1 \frac{2}{\Delta \ell} + h_2 \left(\frac{2}{\Delta \ell}\right)^2};$$

$$c_2 = - \frac{h_0 - h_1 \frac{2}{\Delta \ell} + h_2 \left(\frac{2}{\Delta \ell}\right)^2}{h_0 + h_1 \frac{2}{\Delta \ell} + h_2 \left(\frac{2}{\Delta \ell}\right)^2}.$$

6. Procédé selon une des revendications 1 à 5, caractérisé par le fait que l'une des coordonnées de lieu est la position angulaire ($\varphi$) de la pièce (11, 42, 60) sur la trajectoire parcourue par celle-ci et que $\Delta\varphi = 2\pi/n$, n représentant le nombre de tronçons équidistants.

7. Dispositif de régulation pour réguler l'entraînement d'une pièce (11, 42, 60) d'une machine-outil à déplacer à l'aide de l'entraînement le long d'une trajectoire (l, $\varphi$) déterminée, dans lequel le déplacement peut varier selon une grandeur de référence périodique ou dans lequel une force parasite périodique influe sur le déplacement, comportant

   un régulateur (1,3; 4; 56; 66) pour produire la grandeur de sortie du régulateur (u, $u_M$) pour l'entraînement,
   un transmetteur de valeur réelle (17, 48, 65) pour déterminer la valeur réelle (x) pour l'entraînement de la pièce (11, 42, 60)
   un transmetteur de valeur de consigne (16; 52) pour indiquer une valeur de consigne (w) pour l'entraînement de la pièce (11, 42, 60),
   un comparateur (53) pour former l'écart de réglage (e) sur la base d'une comparaison de la valeur réelle (x) avec la valeur de consigne (w),

   caractérisé par le fait
   qu'il est prévu un dispositif pour diviser la trajectoire (l, $\varphi$) parcourue par la pièce (11, 42, 60) en tronçons ($\Delta$l, $\Delta\varphi$) équidistants ainsi que pour déterminer et mémoriser l'écart de réglage ($e_k(l_k)$, $e_k(\varphi_k)$) qui correspond au lieu géométrique ($l_k$, $\varphi_k$) actuel de la pièce sur la trajectoire parcourue, le régulateur (1,3; 4; 56; 66) ou un organe réglant (3) de celui-ci lié au lieu géométrique produisant la grandeur de sortie de régulateur ($u_{mk}(l_k)$, $u_{mk}(\varphi_k)$) qui correspond au lieu géométrique ($l_k$, $\varphi_k$) actuel de la pièce (11, 42, 60) sur la trajectoire parcourue par celle-ci, en exploitant l'écart de réglage déterminé et mémorisé précédemment.

8. Dispositif de régulation selon la revendication 7, caractérisé par le fait que le régulateur (1, 3; 4; 56; 66) présente en plus de l'organe réglant lié au lieu géométrique (3) un organe réglant lié au temps (1) auquel on envoie comme grandeur d'entrée l'écart de réglage (e(t)) en fonction du temps et par le fait que les deux organes (1, 3) sont connectés en parallèle.

9. Dispositif de régulation selon la revendication 7 ou 8, caractérisé par le fait que la relation entre la grandeur de sortie ($u_{mk}(l_k)$, $u_{mk}(\varphi_k)$) du premier organe réglant (3) et l'écart de réglage ($e_k(l_k)$, ($e_k(\varphi_k)$) lié au lieu géométrique est disponible en tant que système d'ordre supérieur, dont les coefficients dépendent de la division ($\Delta$l, $\Delta\varphi$) de la trajectoire parcourue par la pièce (11, 42, 60).

10. Dispositif de régulation selon la revendication 7 ou 8, caractérisé par le fait que la relation entre la grandeur de sortie ($u_{mk}(l_k)$, $u_{mk}(\varphi_k)$) du premier organe réglant (3) et l'écart de réglage ($e_k(l_k)$, ($e_k(\varphi_k)$ est disponible en tant que système d'ordre deux, dont les coefficients dépendent de la division ($\Delta$l, $\Delta\varphi$) de la trajectoire parcourue par la pièce (11, 42, 60).

## FIG. 1

## FIG. 2

# FIG. 3

FIG. 4

FIG. 5

FIG. 6

# FIG. 7

# FIG. 8

WINKEL-GEBER

WERKSTÜCK-ANTRIEB

DREHMEIßEL-ANTRIEB

POSITIONS-GEBER

# FIG. 9